# EUROPÄISCHE PATENTSCHRIFT

(11) **EP 0 988 782 B1**
(45) Veröffentlichungstag und Bekanntmachung des Hinweises auf die Patenterteilung: **09.04.2003**
(21) Anmeldenummer: 99116591.1
(22) Anmeldetag: 25.08.1999
(51) Int. Cl.: A01D 75/18

(54) **Metallortungsvorrichtung in einem Erntegutförderer**
Metal locating device for crop conveyor
Dispositif à localiser des métaux dans un transporteur de produits de récolte

(30) Priorität: 23.09.1998 DE 19843608
(43) Veröffentlichungstag der Anmeldung: 29.03.2000
(73) Patentinhaber: CLAAS KGaA, 33428 Harsewinkel (DE)
(72) Erfinder: Behnke, Willi, 33803 Steinhagen (DE); Frosch, Andreas, 33330 Gütersloh (DE)

(56) Entgegenhaltungen:
- EP-A- 0 229 991
- EP-A- 0 546 509
- DE-A- 19 620 526
- FR-A- 2 700 661

## Beschreibung

Die Erfindung betrifft eine Metallortungsvorrichtung in einem Erntegutförderer, wobei in einer Förderhohlwalze in Richtung von deren Welle nebeneinander Permanentmagnete feststehend angeordnet sind nach dem oberbegriff des Anspruch 1.

Eine derartige Metallortungsvorrichtung ist aus der DE 43 01 611 A1 bekannt, bei der mehrere Permanentmagnete quer zur Förderrichtung des Erntegutes innerhalb einer hohlen Förderwalze mit einem der Magnetpole auf diese gerichtet nahe deren Innenfläche gereiht angeordnet sind und wobei die Permanentmagnete jeweils von Sensorspulen umgeben sind und der jeweils andere Magnetpol in einem U-förmigen Joch aufgenommen ist, dessen beiden Jochenden nahe der Förderwalzeninnenfläche enden. Auf diese Weise erstreckt sich das wesentlich Sensorfeld durch die Förderwalze in den angrenzenden Förderspalt bis in eine Tiefe, die annähernd der halben Jochweite entspricht. Die Signale der Sensoren werden zur Bildung von Nutzsignalen addiert und zur Kompensation von Störsignalen, die insbesonders durch die Bewegung der Förderrippen von Förderwalzen im Sensorfeldbereich enstehen, voneinander subtrahiert und so als Referenzgröße benutzt. Nachteilig an der Anordnung ist die relativ geringe Reichweite des Sensorfeldes, da einer Aufweitung des Joches Grenzen gesetzt sind, da sich zulaufseitig am Förderspalt sehr sensorstörend drehende Teile befinden und ablaufseitig eine zu späte Detektion erfolgen wurde, die ein Stillsetzen des Förderers nicht ermöglichen würde, bevor ein erkanntes Metallteil den anschließenden Häcksler erreicht.

Es ist Aufgabe der Erfindung, die Metallortungsvorrichtung so zu verbessern, daß ihr wirksames Sensorfeld im Förderspalt weiterreichend ist und das Nutz-/Störsignalverhältnis der Sensorsignale erhöht ist.

Die Lösung besteht darin, daß das auf den radial nach außen gerichteten Polen der Permanentmagnete jeweils ein Polschuh, von innen nahe an die Förderhohlwalze reichend, angeordnet ist, der die zugehörige Sensorwicklung durchsetzt und dessen freie Polflächen schmaler als die des Permanentmagneten ist, so daß das Polschuhmaterial an der freien Polfläche erhöht Flächenspezifisch durchflutet ist.

Vorteilhafte Ausgestaltungen sind in den Unteransprüchen angeführt.

Dadurch, daß die freie Polschuhfläche schmaler als die mit dem Polschutz besetzte Magnetpolfläche ist und durch den Polschuh die Erstreckung der Magnetanordnung in der Feldrichtung vergrößert ist, dringt das Feld tiefer in den Förderspalt ein, der andererseits durch eine mitlaufende Andruckgegenwalze begrenzt ist. Außerdem ist der jeweils im Magnetfeld des Polschutzes befindliche Walzensektor schmaler als ohne den Polschutz, wodurch die Störsignale, die durch die metallischen Rippen der Walzen beim Durchlaufen entstehen, relativ zum Nutzsignal kleiner und in den verschiedenen Sensorvorrichtungen einander ähnlicher sind, so daß sie besser gegeneinander zu kompensieren sind.

Die Gesamtlänge der Magnet-Polschuhanordnung entspricht vorzugsweise einer mittleren Förderspaltweite, so daß das bei Durchlauf eines normierten metallischen Fremdkörpers dieser auch bei größtem Erntegutdurchsatz und größter Spaltweite auch in äußerster Lage des Fremdkörpers ein gut detektierbares Nutzsignal erzeugt.

Die Magnete, Polschuhe und zugehörige Wicklungen werden vorteilhaft jeweils als einzelne Baugruppen fest verbunden. Diese Baugruppen werden auf einen weichmagnetischen plattenförmigen Träger der an der feststehenden Walzenachse festgelegt wird, austauschbar, einander eng benachbart montiert.

Sehr förderlich ist die Ausbildung der Polschuhe und auch des Trägers aus geschichteten gegeneinander isolierten Transformatorblechen, wodurch die Wirbelstromverluste des Nutzsignales reduziert werden. Die einzelnen Bleche sind vorzugsweise radial oder annähernd radial ausgerichtet.

Die Permanentmagnete sind vorzugsweise mit ihren Feldern parallel orientiert. Die Signalhöhen die mit einem Durchlauf von einem standardisierten Metallkörper unter gleichen Bedingungen in den verschiedenen Spaltbereichen der einzelnen Sensoren entstehen, sind in der Mitte höher als in den seitlichen Endbereichen, weshalb vorteilhaft eine Normierung der Signalhöhen vorgenommen wird und die normierten Signale störkompensierend verknüpft werden.

Vorteilhafte Ausgestaltungen sind in den Figuren 1 bis 4 dargestellt.
- Fig. 1: zeigt eine Seitenansicht einer Vorrichtung, eingebaut;
- Fig. 2: zeigt eine Stirnansicht einer Vorrichtung, eingebaut;
- Fig. 3: zeigt eine Aufsicht auf eine Vorrichtung;
- Fig. 4: zeigt eine Signalauswerteschaltung.

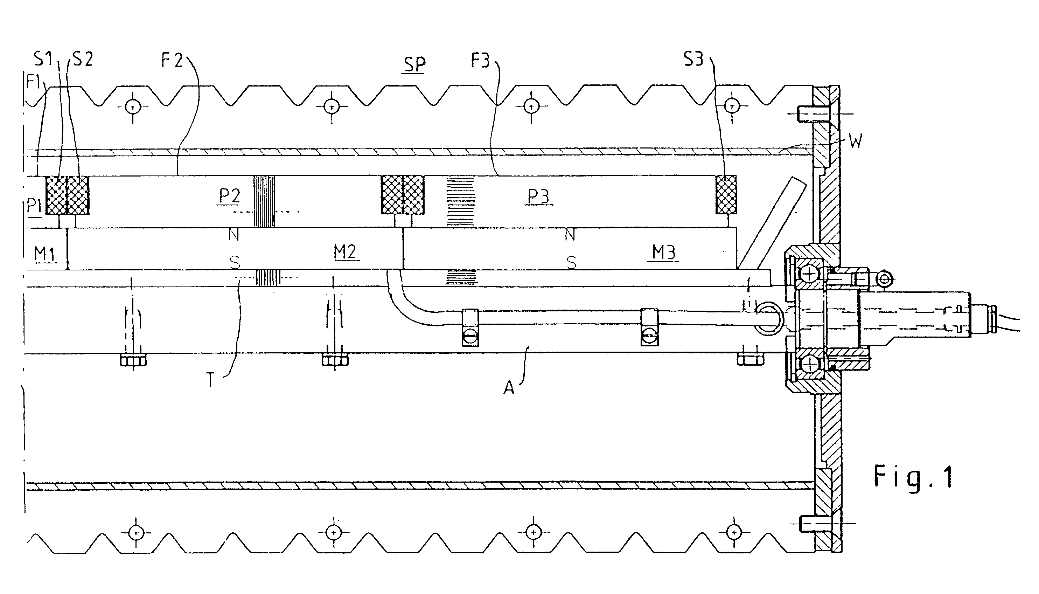

Fig. 1 zeigt eine Seitenansicht auf die Längsseite der Sensorvorrichtung. Es sind beispielsweise drei Permanentmagnete M1 - M3 mit ihren Feldern parallel gerichtet nebeneinander angeordnet. Auf den Nordpolflächen N ist jeweils ein Polschuh P1 - P3 angeordnet, der von einer Sensorwicklung S1 - S3 umgeben ist.

Es sind austauschbare Baugruppen jeweils aus einem Magneten M1, einem Polschuh P1 und einer Sensorwicklung S1 gebildet. Diese Baugruppen sind dicht aneinandergereiht auf einem Träger T aus weichmagnetischem Material montiert, der auf einer feststehenden Welle A der Förderhohlwalze W festgelegt ist. Die Wicklungsanschlüsse sind seitlich aus der Welle herausgeführt.

Die Polschuhe P1 - P3 und der Träger T sind aus gestapelten Transformatorblechen zusammengesetzt, die entweder radial ausgerichtet paketiert sind, wie an einem kurzen Abschnitt des Polschuhes P2 angedeutet ist, oder axial gerichtet geschichtet sind, wie an einem kurzen Abschnitt des Polschuhes P3 dargestellt.

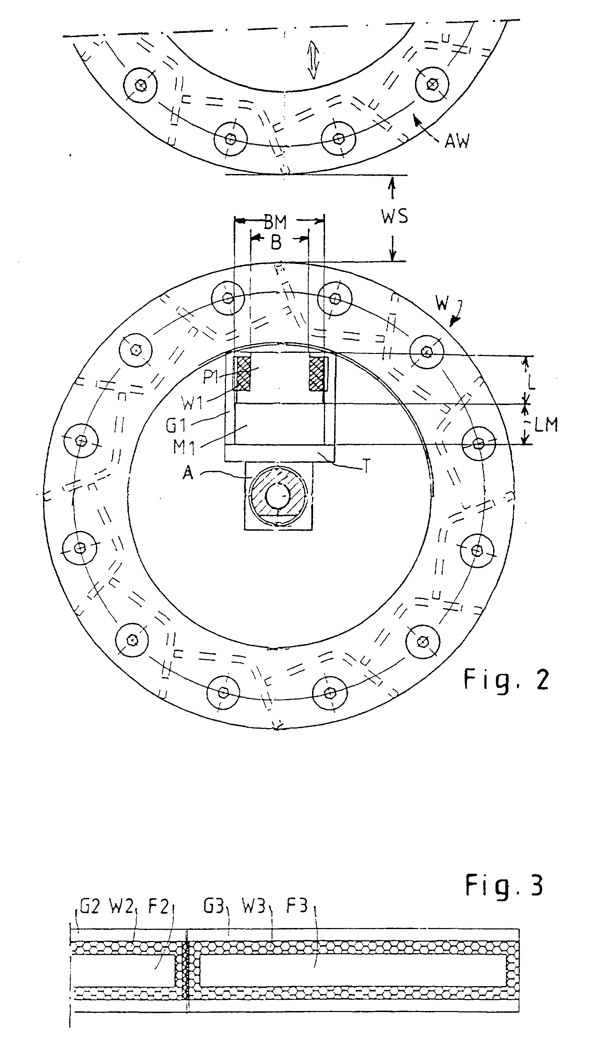

Fig. 2 zeigt einen Querschnitt der Sensorvorrichtung. Auf der feststehenden Welle A ist der flache Träger T montiert, auf dem die Baugruppen jeweils mit dem Magneten M1, dem Polschuh P1 und der Sensorvorrichtung S1 aufgebaut sind. Die Baugruppe ist von einem Gehäuse G1 umschlossen.

Die freie Polschuhfläche F1 reicht bis nahe an die Hohlwalze W. Die Breite B der freien Polschuhfläche F1 ist etwa 1/3 kleiner als die Magnetbreite MB, so daß eine entsprechende Feldkonzentration erfolgt.

Dadurch ist die Störsignaldauer, die die Walzenrippen WR beim Durchlauf des Feldes erzeugen, geringer. Die Länge L des Polschuhes entspricht etwa der Magnetbreite. Die Gesamtlänge aus der Magnetlänge LM und der Polschuhlänge L entspricht etwa der mittleren Förderspaltweite WS, des Förderspaltes SP, der variabel zwischen der Förderwalze W und und einer federnd gegengehaltenen Andruckwalze AW auftritt.

Dadurch wird ein definierter Minimalmetallkörper beim Durchlauf auch nahe an der Andruckwalze noch von einem ausreichenden Magnetfeldteil erfaßt und infolgedessen noch detektiert.

Fig. 3 zeigt eine Aufsicht auf einen Abschnitt mehrerer die drei nebeneinander montierter Baugruppen mit den freien Polflächen F2, F3 und den Wicklungen W2 - W3. Die Gehäuse G2 - G3 umfassen die Baugruppen nur an ihrer Längsseite. Die Magnete und Wicklungen W2 - W3 liegen eng benachbart.

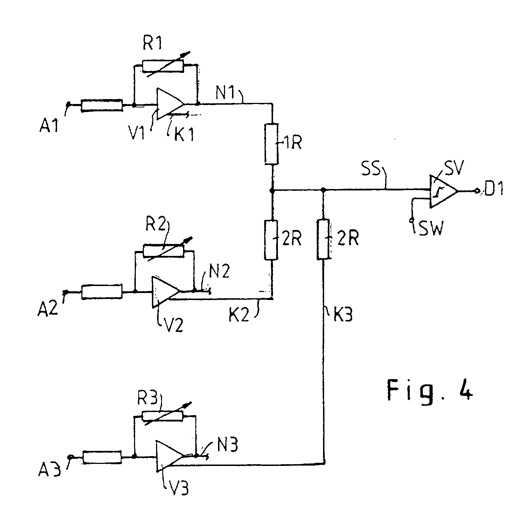

Fig. 4 zeigt eine Auswerteschaltung der Ausgangssignale A1 - A3 der Sensorwicklungen S1 - S3. Diese werden in Eingangsverstärkern V1 - V3 über entsprechend eingestellte Rückkoppelnetzwerke R1 - R3 auf gleiche Ausgangspegel normiert. Jeweils eines der Pegelnormierten Signale N1 - N3 und jeweils die Komplementsignale K1 - K3 der übrigen pegelnormierten Signale werden jeweils in einem Summiernetwerk 1R, 2R, 2R so gerichtet summiert, daß die Störsignalkomponenten sich weitgehend kompensieren. Das so entstehende Summensignal SS, wird in einen Schwellwertvergleicher SV mit einem vorgegebenen Schwellwert SW verglichen, bei dessen Überschreiten jeweils ein Diskriminatorsignal D1 zur Weiterverarbeitung abgegeben wird. Sind, wie gezeigt, drei Sensoren vorhanden, haben die Widerstände 2R des Summiernetzwerkes, die mit den Kompensationssignalen K1 - K3 beaufschlagt sind, einen doppelt so großen Widerstand wie der Widerstand 1R, der mit den Nutzsignal N1 belegt ist.

Entsprechendes gilt für die weiteren Summierer und Vergleicher die nicht im Detail dargestellt sind.

## Patentansprüche

1. Metallortungsvorrichtung in einem Erntegutförderer, wobei in einer Förderhohlwalze (W) in Richtung von deren Welle (A) nebeneinander Permanentmagnete (M1 - M3) feststehend angeordnet sind, deren einer Pol (N) jeweils radial so nach außen gerichtet ist, daß dessen Magnetfeld von innen nach außen die Förderhohlwalze (W) und einen anschließenden Förderspalt (SP) mit dem Erntegut durchdringt, und wobei die Magnetfelder jeweils eine Sensorwicklung (S1 - S3) axial durchsetzen, die ebenfalls in der Förderhohlwalze (W) angeordnet ist, **dadurch gekennzeichnet, daß** auf den radial nach außen gerichteten Polen der Permanentmagnete (M1 - M3) jeweils ein Polschuh (P1 - P3), von innen nahe an die Förderhohlwalze (W) reichend, angeordnet ist, der die zugehörige Sensorwicklung (S1 - S3) durchsetzt und dessen freie Polflächen (F1 - F3) schmaler als die des Permanentmagneten (M1 - M3) ist, so daß das Polschuhmaterial an der freien Polfläche erhöht Flächenspezifisch durchflutet ist.

2. Metallortungsvorrichtung nach Anspruch 1, **dadurch gekennzeichnet, daß** die Breite (B) der freien Polflächenseite etwa 1/3 kleiner als die Permanentmagnetbreite (BM) ist und der Polschuh (P1) eine Länge (L) hat, die etwa der Permanentmagnetbreite (BM) entspricht und die Gesamtlänge aus der Polschuhlänge (L) und der Magnetlänge (LM) etwa einer mittleren Förderspaltweite (WS) entspricht.

3. Metallortungsvorrichtung nach einem der vorstehenden Ansprüche, **dadurch gekennzeichnet, daß** jeweils der Permanentmagnet (M1) der Polschuh (P1) und die Sensorwicklung (S1) zu einer Baugruppe verbunden sind und solche Baugruppen eng nebeneinander auf einem weichmagnetischen, plattenförmigen Träger (T) montiert sind.

4. Metallortungsvorrichtung nach Anspruch 3, **dadurch gekennzeichnet, daß** die Permanentmagnete (M1 - M3) und die Sensorwicklungen (S1 - S3) jeweils in Achsrichtung der Förderhohlwalze (W) eng benachbart angeordnet sind.

5. Metallortungsvorrichtung nach einem der vorstehenden Ansprüche, **dadurch gekennzeichnet, daß** die Polschuhe (P1 - P3) und/oder der Träger (T) aus Transformatorblechen geschichtet zusammengesetzt sind.

6. Metallortungsvorrichtung nach Anspruch 5, **dadurch gekennzeichnet, daß** die Transformatorbleche im wesentlichen radial gerichtet angeordnet und gegeneinander isoliert fest verbunden sind.

7. Metallortungsvorrichtung nach Anspruch 5, **dadurch gekennzeichnet, daß** die Transformatorbleche auch parallel gerichtet geschichtet angeordnet und gegeneinander isoliert fest verbunden sind.

8. Metallortungsvorrichtung nach einem der vorstehenden Ansprüche, **dadurch gekennzeichnet, daß** die Permanentmagnete (M1 - M3) parallel gerichtet magnetisiert sind.

9. Metallortungsvorrichtung nach einem der vorstehenden Ansprüche, **dadurch gekennzeichnet, daß** die Ausgangssignale (A1 - A3) der Sensorwicklungen (S1 - S3) bezüglich eines normierten Metallteildurchlaufes durch einen jeweils zugehörigen Förderspaltbereich (SP1 - SP3) aufeinander normiert werden und so summiert zu einer Störsignalkompensation genutzt werden.

## Claims

1. A metal detecting apparatus in a crop material conveyor, wherein permanent magnets (M1-M3) are arranged stationarily in a hollow conveyor cylinder (W) in mutually juxtaposed relationship in the direction of the shaft (A) of the cylinder, a pole (N) of each of the permanent magnets being directed radially outwardly in such a way that the magnetic field thereof passes from the inside outwardly through the hollow conveyor cylinder (W) and an adjoining conveyor gap (SP) with the crop material and wherein the magnetic fields respectively pass axially through a sensor winding (S1-S3) which is also arranged in the hollow conveyor cylinder (W), **characterised in that** arranged on the radially outwardly directed poles of the permanent magnets (M1-M3) is a respective pole piece (P1-P3), extending from the inside to close to the hollow conveyor cylinder (W), which pole piece passes through the associated sensor winding (S1-S3) and the free pole face (F1-F3) thereof being narrower than that of the permanent magnet (M1-M3) so that the pole piece material at the free pole face involves increased magnetomotive force therethrough in area-specific manner.

2. A metal detecting apparatus according to claim 1 **characterised in that** the width (B) of the free pole face side is approximately 1/3 smaller than the permanent magnet width (BM) and the pole piece (P1) is of a length (L) which approximately corresponds to the permanent magnet width (BM) and the overall length of the pole piece length (L) and the magnet length (LM) approximately corresponds to a mean conveyor gap width (WS).

3. A metal detecting apparatus according to one of the preceding claims **characterised in that** in each case the permanent magnet (M1), the pole piece (P1) and the sensor winding (S1) are connected to form a unit and such units are mounted in closely mutually juxtaposed relationship on a soft-magnetic, plate-shaped carrier (T).

4. A metal detecting apparatus according to claim 3 **characterised in that** the permanent magnets (M1-M3) and the sensor windings (S1-S3) are respectively arranged in closely adjacent relationship in the axial direction of the hollow conveyor cylinder (W).

5. A metal detecting apparatus according to one of the preceding claims **characterised in that** the pole pieces (P1-P3) and/or the carrier (T) are composed of transformer plates in a laminated structure.

6. A metal detecting apparatus according to claim 5 **characterised in that** the transformer plates are arranged directed substantially radially and are fixedly connected in insulated relationship relative to each other.

7. A metal detecting apparatus according to claim 5 **characterised in that** the transformer plates are also arranged laminated directed in parallel relationship and are fixedly connected in insulated relationship relative to each other.

8. A metal detecting apparatus according to one of the preceding claims **characterised in that** the permanent magnets (M1-M3) are magnetised in parallel relationship.

9. A metal detecting apparatus according to one of the preceding claims **characterised in that** the output signals (A1-A3) of the sensor windings (S1-S3) are standardised to each other with respect to a standardised passage of a metal member through a respectively associated conveyor gap region (SP1-SP3) and summed **in that** way are used for interference signal compensation purposes.

## Revendications

1. Dispositif de localisation de métaux dans un transporteur de produit de récolte, dans lequel des aimants permanents (M1 - M3) sont disposés fixes dans un cylindre creux d'alimentation (W), côte à côte dans la direction de l'axe (A) du cylindre, aimants dont un pôle (N) est orienté radialement vers l'extérieur, de telle sorte que son champ magnétique traverse de l'intérieur vers l'extérieur le cylindre creux d'alimentation (W) et une fente de transport (SP) avec le produit de récolte, et dans lequel les champs magnétiques traversent axialement chacun un enroulement de capteur (S1 - S3) également disposé dans le cylindre creux d'alimentation (W), **caractérisé en ce que** sur les pôles dirigés radialement vers l'extérieur des aimants permanents (M1-M3) est disposée chaque fois une pièce polaire (P1-P3) qui s'étend côté intérieur jusqu'à proximité du cylindre creux d'alimentation (W), qui traverse l'enroulement de capteur (S1-S3) concerné et dont les surfaces polaires (F1-F3) libres sont plus étroites que celles de l'aimant permanent (M1-M3), de sorte que le matériau de la pièce polaire au niveau de la surface polaire libre est traversé par un flux surfacique plus élevé.

2. Dispositif de localisation de métaux selon la revendication 1, **caractérisé en ce que** la largeur (B) de la surface polaire libre est environ 1/3 plus petite que la largeur (BM) de l'aimant permanent et que la pièce polaire (P1) a une longueur (L) qui correspond sensiblement à la largeur (BM) de l'aimant permanent et la longueur totale longueur (L) de la pièce polaire et longueur (LM) de l'aimant correspond sensiblement à une largeur de fente de transport (WS) moyenne.

3. Dispositif de localisation de métaux selon une des revendications précédentes, **caractérisé en ce que** l'aimant permanent (M1), la pièce polaire (P1) et l'enroulement de capteur (S1) sont assemblés en un module et que de tels modules sont montés serrés les uns contre les autres, sur un support (T) magnétique doux, en forme de plaque.

4. Dispositif de localisation de métaux selon la revendication 3, **caractérisé en ce que** les aimants permanents (M1-M3) et les enroulements de capteur (S1-S3) sont disposés serrés les uns côté des autres dans la direction axiale du cylindre creux d'alimentation (W).

5. Dispositif de localisation de métaux selon une des revendications précédentes, **caractérisé en ce que** les pièces polaires (P1-P3) et/ou le support (T) sont composés d'un empilage de tôles à transformateurs.

6. Dispositif de localisation de métaux selon la revendication 5, **caractérisé en ce que** les tôles à transformateurs sont orientées essentiellement radialement et sont liées fermement en étant mutuellement isolées.

7. Dispositif de localisation de métaux selon la revendication 5, **caractérisé en ce que** les tôles à transformateurs sont disposées en un empilage parallèle et sont liées fermement en étant mutuellement isolées.

8. Dispositif de localisation de métaux selon une des revendications précédentes, **caractérisé en ce que** les aimants permanents (M1-M3) sont magnétisés avec une orientation parallèle.

9. Dispositif de localisation de métaux selon une des revendications précédentes, **caractérisé en ce que** les signaux de sortie (A1-A3) des enroulements de capteurs (S1-S3) sont mutuellement normés en ce qui concerne le passage d'un élément en métal dans une zone de fente de transport (SP1-SP3) correspondante et sont utilisés cumulés en compensation de signal parasite.
